(19) **Europäisches Patentamt / European Patent Office / Office européen des brevets**

(11) **EP 4 718 342 A1**

(12) **DEMANDE DE BREVET EUROPEEN**

(43) Date de publication:
**01.04.2026 Bulletin 2026/14**

(21) Numéro de dépôt: **24306601.6**

(22) Date de dépôt: **30.09.2024**

(51) Classification Internationale des Brevets (IPC):
**G06N 10/60** *(2022.01)*

(52) Classification Coopérative des Brevets (CPC):
**G06N 10/60**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(71) Demandeur: **Colibritd**
**75008 Paris (FR)**

(72) Inventeurs:
• **JAFFALI, Hamza**
  **75008 Paris (FR)**
• **DE BOUTRAY, Henri**
  **75008 Paris (FR)**
• **BAUMANN. Karla**
  **75008 Paris (FR)**
• **MOHDEB, Youcef**
  **75008 Paris (FR)**

(74) Mandataire: **Germain Maureau**
  **12, rue Boileau**
  **69006 Lyon (FR)**

(54) **PROCÉDÉ DE RÉSOLUTION D'UN SYSTÈME D'AU MOINS UNE ÉQUATION DIFFÉRENTIELLE PORTANT SUR AU MOINS UNE FONCTION À VALEURS RÉELLES SUR UN DOMAINE DE DÉFINITION DONNÉ**

(57) La présente invention concerne un procédé de résolution d'un système d'au moins une équation différentielle portant sur au moins une fonction à valeurs réelles sur un domaine de définition donné, le procédé comprenant la mise en oeuvre, par un calculateur hybride quantique-classique (1, 2), d'étapes de :

(a) Pour chaque fonction, encodage au moyen d'un VQC de l'expression d'une solution candidate de ladite fonction dans une base de polynômes orthogonaux, ledit VQC étant défini par un ensemble de paramètres quantiques ;

(b) Pour chaque fonction, évaluation en chacun d'un ensemble de points prédéfinis, des valeurs à la fois de ladite solution candidate et d'au moins une dérivée de ladite solution candidate au moyen du VQC de ladite fonction, en exprimant la dérivée de ladite solution dans ladite base de polynômes orthogonaux par dérivation de ladite expression ;

(c) Optimisation de la valeur desdits paramètres quantiques des VQC de chaque fonction, de sorte à minimiser une fonction de coût définie par ledit système d'équations différentielles et fonction desdites évaluations pour chaque fonction de la solution candidate et de sa dérivée ;

(d) Pour chaque fonction, reconstruction d'une solution optimale de ladite fonction telle qu'encodée par le VQC avec les paramètres optimisés.

[Fig. 3]

**FIG. 3**

**Description**

DOMAINE TECHNIQUE GÉNÉRAL

La présente invention se rapporte au domaine de l'informatique quantique. Plus précisément, elle concerne un procédé de résolution d'un système d'au moins une équation différentielle portant sur au moins une fonction à valeurs réelles sur un domaine de définition donné, au moyen d'un calculateur hybride quantique-classique.

ETAT DE L'ART

Les ordinateurs quantiques sont prometteurs pour simuler le comportement de systèmes naturels, une tâche qui est généralement difficile pour les ordinateurs « classiques » (i.e. les ordinateurs à logique binaire, à processeur conventionnel typiquement à base de silicium).

La simulation des hamiltoniens est la base de l'informatique quantique analogique. Dans ce schéma, un problème pertinent est mis en correspondance avec la dynamique d'un système quantique. Habituellement, les solutions des problèmes sont encodées dans « l'état fondamental » d'un hamiltonien.

La recherche de ces états fondamentaux est particulièrement simple avec les ordinateurs quantiques de type « quantum annealer », qui utilisent la transition adiabatique d'un hamiltonien initial simple à l'état final (complexe), c'est-à-dire le théorème adiabatique. En pratique, des quantum annealers qui utilisent le modèle d'Ising sont déjà fabriqués et des revendications -modestes-d'avantage quantique ont commencé à émerger.

Ce modèle peut être traduit en un problème d'optimisation binaire quadratique sans contrainte (QUBO de l'anglais quadratic unconstrained binary optimization), qui trouve de nombreuses applications dans concrètes. QUBO est un problème simple dont la solution optimale, en revanche, est très difficile à trouver par des moyens classiques. Il peut être adapté à de nombreux problèmes d'optimisation combinatoire.

Au lieu de s'attaquer à des problèmes pour lesquels les ordinateurs classiques sont peu performants, certains chercheurs ont commencé à développer des algorithmes pour des problèmes typiques, tels que la résolution d'équations différentielles (DE - pour differential équations). En effet ces équations régissent de nombreux systèmes physiques, et leur résolution est de la plus haute importante dans de nombreux domaines. De plus la résolution par des techniques analytiques de système de plusieurs équations aux dérivées partielles (PDE) reste compliquée et en pratique limitée à quelques cas précis.

En informatique quantique, l'équation de la chaleur ( $\frac{\partial T(x,t)}{\partial t} = \frac{\partial^2 T(x,t)}{\partial x^2}$ ) a récemment été résolue par un recuit quantique dans une configuration hybride, une méthode entièrement quantique a été utilisée pour résoudre l'équation des ondes ( $\Delta \vec{E} = \frac{1}{c^2} \frac{\partial^2 \vec{E}}{\partial t^2}$ ), et une autre pour les équations de Navier-Stokes.

Les équations différentielles non linéaires, comme ces dernières, sont parmi les plus difficiles à résoudre par des méthodes numériques et ont fait l'objet d'algorithmes récemment développés.

Dans un cas (M. Lubasch, J. Joo, P. Moinier, M. Kiffner, and D. Jaksch, Variational quantum algorithms for nonlinear problems, Phys. Rev. A 101 (January 2020), no. 1, 010301*)*, une équation de Schrodinger non linéaire a été résolue par un algorithme VQA (variationnal quantum algorithm) qui incluait un test de Hadamard comme sous-programme. L'approche est similaire aux méthodes classiques de différences finies car le domaine de la fonction est discrétisé. Les auteurs affirment que - 20 qubits corrigés suffisent pour rivaliser avec les superordinateurs de pointe.

La plupart de ces méthodes sont toutefois limitées à un type d'équation différentielle (aux dérivées partielles ou non, linéaires, etc.), voir par exemple la demande EP3971793.

Une méthode récente, décrite dans le document O. Kyriienko, A. E. Paine, and V. E. Elfving, Solving nonlinear differential équations with différentiable quantum circuits*,* légèrement plus polyvalente (même si elle ne permet pas encore de gérer les PDE), fait appel à des circuits quantiques pour évaluer la fonction et sa dérivée en des points, puis évaluer une fonction de coût définie par l'équation. Les paramètres du circuit peuvent itérativement être optimisés de sorte à minimiser la fonction de coût.

Cette méthode apporte satisfaction, mais nécessite des circuits quantiques spécifiques, dits differentiable quantum circuits DQC, pour évaluer les dérivées sans erreurs numériques intrinsèques.

L'inconvénient principal est que le nombre de circuits à n qubits nécessaires croît proportionnellement à $n^m$, où m est l'ordre le plus élevé des dérivées dans l'équation différentielle, de sorte que rapidement cette solution devient inutilisable.

La présente invention vient améliorer la situation, en proposant une solution universelle de résolution d'équations différentielles, qui ne nécessite qu'un nombre limité de qubits et de circuits, et qui reste très précis.

PRÉSENTATION DE L'INVENTION

La présente invention se rapporte selon un premier aspect à un procédé de résolution d'un système d'au moins une équation différentielle portant sur au moins une fonction à valeurs réelles sur un domaine de définition donné, le procédé comprenant la mise en oeuvre, par un calculateur hybride quantique-classique, d'étapes de :

(a) Pour chaque fonction, encodage au moyen d'un circuit variationnel quantique, VQC, de l'expression d'une solution candidate de ladite fonction dans une base de polynômes orthogonaux, ledit VQC étant défini par un ensemble de paramètres quantiques ;

(b) Pour chaque fonction, évaluation en chacun d'un ensemble de points prédéfinis dudit domaine de définition donné, des valeurs à la fois de ladite solution candidate et d'au moins une dérivée de ladite solution candidate au moyen du VQC de ladite fonction, en exprimant la dérivée de ladite solution dans ladite base de polynômes orthogonaux par dérivation de ladite expression de la solution candidate de ladite fonction dans ladite base de polynômes orthogonaux ;

(c) Optimisation de la valeur desdits paramètres quantiques des VQC de chaque fonction, de sorte à minimiser une fonction de coût définie par ledit système d'équations différentielles et fonction desdites évaluations pour chaque fonction de la solution candidate et de sa dérivée ;

(d) Pour chaque fonction, reconstruction d'une solution optimale de ladite fonction telle qu'encodée par le VQC avec les paramètres optimisés.

Selon des caractéristiques avantageuses et non limitatives :
Chaque VQC est basé sur une structure de type Hardware Efficient Ansatz, HEA, lesdits paramètres quantiques étant des paramètres de rotation.

Lesdits polynômes orthogonaux sont les polynômes de Tchebychev.

Le procédé comprend une étape (a0) d'initialisation des paramètres quantiques de manière aléatoire.

Au moins une condition limite est associée audit système d'équations différentielles, la fonction de coût est de la forme $L(\theta) = L^{diff}(\theta) + \eta.L^{limites}(\theta)$, où $\theta$ est l'ensemble de paramètres quantiques, $L^{diff}$ un premier terme représentatif d'une erreur sur la ou les équations différentielles, $L^{limites}$ est un deuxième terme représentatif d'une erreur sur la ou les conditions limites, et $\eta$ est un coefficient prédéfini.

Le premier terme $L^{diff}$ est l'erreur moyenne au carré de toutes les équations différentielles pour l'ensemble des points prédéfinis dudit domaine de définition donné, et le deuxième terme $L^{limites}$ est la somme de toutes les erreurs sur toutes les conditions limites pour l'ensemble des points prédéfinis dudit domaine de définition donné.

Ladite solution candidate $f_c$ est évaluée en un point prédéfini xs dudit domaine de définition donné par la formule $f_c(x_s) = \lambda\langle\psi_f|O_c(x_s)|\psi_f\rangle$, où $|\psi_f\rangle$ est l'état de sortie du VQC, $\lambda$ un facteur d'échelle, et $O_c$ un observable diagonal, fonctions de l'expression de ladite solution candidate dans la base de polynômes orthogonaux.

La dérivée q-ième de ladite solution candidate $\dfrac{\partial^q f_c}{\partial x_{j1}...\partial x_{jq}}$ est évaluée en un point prédéfini xs dudit domaine de définition donné par la formule $\dfrac{\partial^q f_c(x_S)}{\partial x_{j1}...\partial x_{jq}} = \lambda\langle\psi_f|O_{\partial qc}(x_s)|\psi_f\rangle$, où $x_{j1}...x_{jq}$ sont q composantes de x, $O_{\partial qc}$ un observable diagonal, fonctions de la q-ième dérivation de ladite expression de la solution candidate de ladite fonction dans ladite base de polynômes orthogonaux.

Lesdits points prédéfinis du domaine de définition donné sont choisis de manière à être répartis uniformément dans ledit domaine de définition donné.

Ledit système d'au moins une équation différentielle modélise un système physique, ladite fonction à valeurs réelles exprimant une grandeur dudit système physique.

Selon un deuxième aspect, l'invention concerne un calculateur hybride quantique-classique, caractérisé en ce qu'il est configuré pour résoudre un système d'au moins une équation différentielle portant sur au moins une fonction à valeurs réelles sur un domaine de définition donné, en mettant en oeuvre des étapes de :

- Pour chaque fonction, encodage au moyen d'un circuit variationnel quantique, VQC, de l'expression d'une solution candidate de ladite fonction dans une base de polynômes orthogonaux, ledit VQC étant défini par un ensemble de paramètres quantiques ;

- Pour chaque fonction, évaluation en chacun d'un ensemble de points prédéfinis dudit domaine de définition donné, des valeurs à la fois de ladite solution candidate et d'au moins une dérivée de ladite solution candidate au moyen du VQC de ladite fonction, en exprimant la dérivée de ladite solution dans ladite base de polynômes orthogonaux par dérivation de ladite expression de la solution candidate de ladite fonction dans ladite base de polynômes orthogonaux ;

- Optimisation de la valeur desdits paramètres quantiques des VQC de chaque fonction, de sorte à minimiser une fonction de coût définie par ledit système d'équations différentielles et fonction desdites évaluations pour chaque fonction de la solution candidate et de sa dérivée ;
- Pour chaque fonction, reconstruction d'une solution optimale de ladite fonction telle qu'encodée par le VQC avec les paramètres optimisés.

Selon un troisième et un quatrième aspect, l'invention concerne un produit programme d'ordinateur comprenant des instructions de code pour l'exécution d'un procédé selon le premier aspect de résolution d'un système d'au moins une équation différentielle portant sur au moins une fonction à valeurs réelles sur un domaine de définition donné ; et un moyen de stockage lisible par un équipement informatique sur lequel est enregistré un produit programme d'ordinateur comprenant des instructions de code pour l'exécution d'un procédé selon le premier aspect de résolution d'un système d'au moins une équation différentielle portant sur au moins une fonction à valeurs réelles sur un domaine de définition donné.

PRÉSENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

[Fig. 1] la figure 1 est un schéma d'un système pour la mise en oeuvre du procédé selon l'invention ;
[Fig. 2]la figure 2 est un logigramme illustrant les étapes d'un mode de réalisation du procédé selon l'invention ;
[Fig. 3]la figure 3 représente schématiquement un exemple de circuit quantique variationnel utilisé mode de réalisation du procédé selon l'invention ;
[Fig. 4a]La figure 4a présente les résultats du présent procédé dans la résolution d'un premier exemple de système d'équations différentielles ;
[Fig. 4b]La figure 4b présente les résultats du présent procédé dans la résolution d'un deuxième exemple de système d'équations différentielles.
[Fig. 4c]La figure 4c présente les résultats du présent procédé dans la résolution d'un troisième exemple de système d'équations différentielles.

DESCRIPTION DÉTAILLÉE

*Architecture*

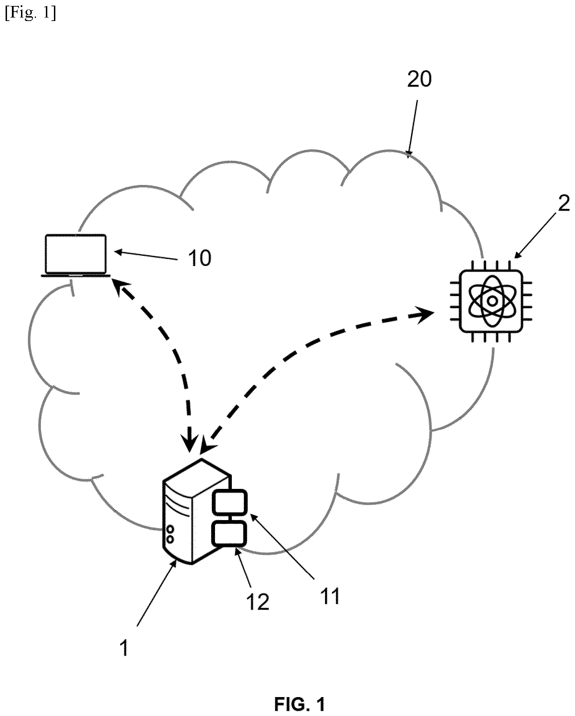

La présente invention concerne un procédé de résolution d'un système d'au moins une équation différentielle portant sur au moins une fonction à valeurs réelles sur un domaine de définition donné, mis en oeuvre dans un calculateur hybride quantique-classique 1, 2 tel que représenté sur la **figure 1.**
Par calculateur hybride quantique-classique 1, 2, on entend un système d'un calculateur classique 1 et d'un calculateur quantique 2 connectés, selon une architecture connue. On peut avoir un terminal 10 connecté au calculateur classique 1 de sorte à jouer le rôle d'interface. Le terminal 10, le calculateur classique 1 et/ou le calculateur quantique 2 peuvent être connectés par un réseau 20 tel que le réseau internet même si les calculateurs classique et quantique 1, 2 sont généralement disposés à proximité immédiate. On note qu'on peut avoir plusieurs calculateurs quantiques 1 en parallèle.
Le calculateur classique 1, i.e. un ordinateur à logique binaire, travaillant sur des bits (état 1 ou 0), comprend des moyens de traitement de données 11 eux-mêmes classiques, i.e. un processeur conventionnel typiquement à base de silicium, et généralement des moyens de stockage de données 12, i.e. une mémoire, par exemple un disque dur. Il s'agit typiquement d'une plateforme en ligne, à laquelle le terminal 10 est connectée via une API.
Le calculateur quantique 2, ou machine quantique, quant à lui travaille sur des qubits dont l'état quantique présente une valeur quantique comportant plusieurs possibilités simultanées. Il comprend classiquement des moyens permettant d'initialiser les qubits, d'appliquer des portes quantiques, et de mesurer des états.
On note n le nombre de qubits, et en l'espèce on aura avantageusement $n \leq 10$, en particulier $n \leq 7$.
Le calculateur classique 1 est configuré pour soit traiter des données de manière autonome, soit envoyer des instructions au calculateur quantique 2, et recevoir des données en réponse
On pourra utiliser des calculateurs classique et quantique connectés de toute nature, par exemple des calculateurs quantiques 2 à ions pièges, ou encore à atome neutre.

Comme l'on verra, certaines étapes du procédé sont en pratique mises en oeuvre exclusivement par le calculateur classique 1, et d'autres par le calculateur quantique 2 sous le contrôle du calculateur classique 1.

Le terminal 10 pourra être n'importe quel équipement tel qu'un PC ou un smartphone.

Le présent procédé vise à résolution d'un système d'au moins une équation différentielle portant sur au moins une fonction à valeurs réelles sur un domaine de définition donné.

Un système d'équations différentielles, parfois appelé simplement système différentiel, est un ensemble d'équations différentielles couplées, c'est-à-dire d'équations différentielles qui ne peuvent pas être résolues séparément.

Une équation différentielle est une équation dont la ou les « inconnue(s) » sont des fonctions, en l'espèce la ou lesdites fonctions à valeurs réelles, et elle se présente sous la forme d'une relation entre ces fonctions inconnues et leurs dérivées successives.

On note E l'ensemble des équations et e une des équations. Mathématiquement, on met tous les termes de chaque équation de sorte qu'on puisse écrire le système sous le forme $\{DE_e(x)=0\}, e \in E$.

On note F l'ensemble des fonctions à valeurs réelles sur lesquelles portent les équations du système, et $f \in F$ une desdites fonctions. Chacune est à valeurs réelles, sur un domaine de définition donné D, ce qui signifie qu'elle prend en entrée $x = (x_1, x_2, \ldots, x_v) \in D \subset \mathbb{R}^v$. On peut avoir au moins une condition limite associée audit système d'équations différentielles (dite également condition de Cauchy) c'est-à-dire une valeurs attendues d'une des fonctions ou d'une de ses dérivées (par exemple $f(0)=f_0$).

A noter que le nombre de fonctions à valeurs réelles sur lesquelles portent les équations du système (i.e. la taille de F) est généralement égal au nombre d'équations du système.

Le présent procédé est comme on le verra particulièrement universel dans la mesure où le système peut comprendre n'importe quel nombre d'équations (y compris une unique équation différentielle, et donc la résolution de ce système reviendra à résoudre cette unique équation différentielle), les équations peuvent être des équations différentielles ordinaires (ODE, ordinary differential équations - la ou les fonctions inconnues recherchées ne dépendent que d'une seule variable, i.e. v=1) comme des équations aux dérivées partielles (PDE, partial differential équations - la ou les fonctions inconnues recherchées peuvent dépendre de plusieurs variables indépendantes, i.e. v>1), et elles peuvent être de n'importe quel ordre.

De manière préférée, ledit système d'au moins une équation différentielle modélise un système physique, et ladite fonction à valeurs réelles exprimant une grandeur dudit système physique. Les équations différentielles sont présentes dans tous les domaines de la science, et il ne sera pas possible ni d'en faire la liste, ni de limiter la portée de l'invention à un domaine particulier.

On verra à la fin de la présente description les exemples de trois systèmes d'équations différentielles, dont deux modélisant un système physique précis :

1/ Cas simple d'un système de 2 ODE du premier ordre $\begin{cases} \frac{df(x)}{dx} - 5 = 0 \\ \frac{dg(x)}{dx} - f(x) = 0 \end{cases}$, en prenant arbitrairement f(0) = g(0) =0 sur un domaine [0, 0.95].

2/ Cas d'un oscillateur harmonique amorti, qui est un système d'une unique ODE du deuxième ordre modélisant un système physique (l'oscillateur), ladite grandeur dudit système physique exprimée par la fonction est la position d'un corps oscillant en fonction du temps, noté x(t) :

$$\frac{d^2x}{dt} + 2\zeta\omega\frac{dx}{dt} + \omega^2 x = 0$$, avec x(0)=2 et x'(0)=0, où $\omega$ représente la fréquence non-amortie de l'oscillateur et $\zeta$

le coefficient d'amortissement, mis respectivement à 9/8 et 45/8. Le domaine est n'importe quel intervalle de $\mathbb{R}^+$, on prend [0, 1] par commodité.

3/ Cas d'une déformation d'un matériau en régime hypoélastique, qui est (en considérant une déformation monodimensionnelle dans un repère cartésien tridimensionnel du matériau - typiquement l'étirement d'une bande métallique) un système de 2 ODE du premier ordre modélisant un système physique (le matériau), les deux grandeurs dudit système physique exprimées par les deux fonctions étant le déplacement d'un point du matériau et la composante du tenseur des contraintes selon l'axe de la déformation en ce point, en fonction de sa position le long de cet axe, notés u(x) et $\sigma_{xx}(x)$ :

$$\begin{cases} \frac{du}{dx} = \varepsilon_{xx}(\sigma_{xx}) \\ \frac{d\sigma_{xx}}{dx} + b_x = 0 \end{cases}$$. Régime hypoplasique signifie que la relation effort-déformation est non linéaire mais réversible

i.e. $\varepsilon_{xx} = \frac{\sigma_{xx}}{3K} + \frac{2\varepsilon_0}{\sqrt{3}}\left(\frac{\sigma_{xx}}{\sqrt{3}\sigma_0}\right)^n$, avec b, K, $\varepsilon_0$ et $\sigma_0$ des paramètres du matériau, et avec u(0)=0 et $\sigma_{xx}$(L)=t, où L est la longueur de la bande (elle s'étend des coordonnées x=0 à x=L) et t la force appliquée. On pourra prendre b=10, $\varepsilon_0$ =0.1, $\sigma_0$ = 5, n=4, K= 100, L=0.9 et t=2. Le domaine est un intervalle de $\mathbb{R}^+$ un peu plus grand que [0 ; L], par exemple à nouveau [0, 0.95]

Le présent procédé vise à la résolution du système, i.e. la détermination d'une solution de la ou les fonctions sur la ou lesquelles le système porte.

Il s'agit d'une résolution analytique, c'est-à-dire que pour une fonction f e F on détermine une expression fonctionnelle d'une solution optimale $f_o$ approximant ladite fonction f. On comprend qu'il pourrait exister une solution exacte qu'on pourrait obtenir par des méthodes algébriques, mais la présente méthode reste essentiellement numérique de sorte que la solution optimale peut dans certains cas être ladite solution optimale $f_o$, mais ne va le plus souvent que l'approcher, bien que l'approximation pourra être aussi précise que l'on souhaitera.

On pourra saisir le système d'équation via le terminal 10, et récupérer la ou les solutions via ce même terminal 10. De surcroit, le terminal 10 pourra être utilisé pour définir un certain nombre de paramètres (nombre de qubits, nombre de circuits, profondeur du ou des circuits, nombre d'itérations, choix des fonctions de la base de polynômes, etc. - voir plus loin).

*Procédé*

Le présent procédé utilise comme l'on verra un ou plusieurs circuit(s) variationnel(s) quantique(s), VQC (Variational Quantum Circuit), de manière astucieuse. Un circuit quantique est un modèle de calcul quantique, similaire aux circuits électroniques classique, dans lequel le calcul quantique est exprimé comme une séquence de portes quantiques, de mesures, d'initialisations de qubits, etc.

Le VQC est un circuit quantique de type connu, dit aussi « circuit quantique paramétrisé ». En effet, un VQC est défini par un ensemble de paramètres quantiques. On note que le terme paramètre « quantique » signifie que ces paramètres sont relatifs à un circuit quantique, mais ils restent des paramètres classiques, i.e. réels.

Les VQC pourront être de tout type existant, par exemple basés sur une structure de type Hardware Efficient Ansatz, HEA, lesdits paramètres quantiques étant alors des paramètres de rotation. Cet exemple sera décrit plus en détail plus loin. De manière préférée, on aura moins de 50 paramètres quantiques, en particulier moins de 30.

Par analogie avec les modèles de machine learning, un VQC peut être entraîné, i.e. les valeurs des paramètres quantiques peuvent être optimisées, en vue d'une tâche particulière, en particulier approximer la fonction solution, en minimisant une fonction de coût, comme cela avait été proposé dans le document O. Kyriienko, A. E. Paine, and V. E. Elfving, Solving nonlinear differential équations with différentiable quantum circuits. On note que ce document nécessitait des circuits particuliers, dit différentiables, ce qui n'est pas le cas du présent procédé.

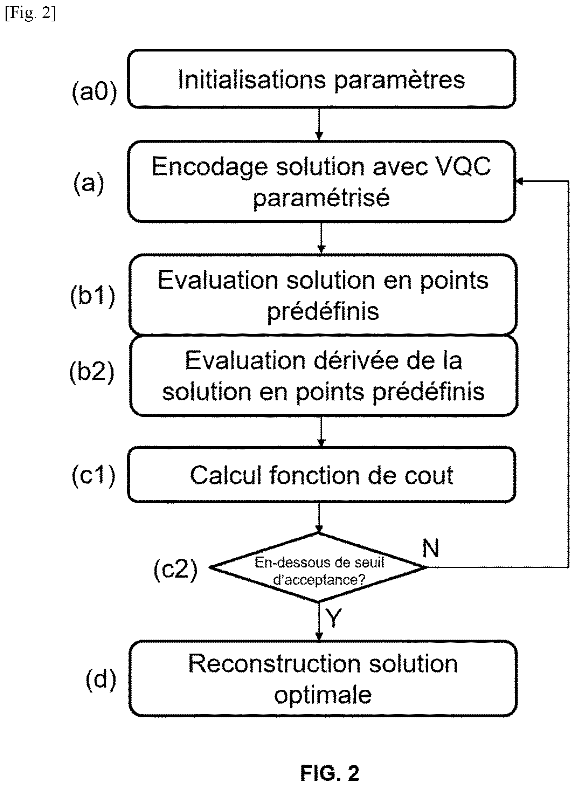

Dans le but d'optimiser les valeurs des paramètres quantiques, en référence à la **figure 2,** le procédé commence avantageusement par une étape (a0) d'initialisation desdits paramètres quantiques, notamment de manière aléatoire. En pratique on prend (et on initialise) un VQC pour chaque fonction sur laquelle porte ledit système.

Ensuite, dans une étape (a) originale, le procédé comprend, pour chaque fonction, l'encodage, au moyen du VQC correspondant, de l'expression d'une solution candidate de ladite fonction dans une base de polynômes orthogonaux. Par base de polynômes orthogonaux, on entend une suite infinie de polynômes à coefficients réels, tel que le i-ième polynôme est de degré i et telle que les polynômes de la suite sont orthogonaux deux à deux pour un produit scalaire donné. Toute fonction peut être approchée par une combinaison de polynômes de ladite base, c'est l'idée derrière ladite étape (a).

Pour reformuler, pour chaque fonction du système, on exprime la fonction dans la base de polynômes orthogonaux, et on l'encode grâce au VQC.

Il est important de comprendre qu'on va encoder la fonction elle-même et pas sa dépendance en variable. En effet, dans le document O. Kyriienko, A. E. Paine, and V. E. Elfving, Solving nonlinear differential équations with différentiable quantum circuits, il était proposé d'encoder x, et les valeurs voisines pour obtenir la dérivée. La présente solution s'avère comme on le verra bien plus efficace.

Lesdits polynômes orthogonaux sont préférentiellement les polynômes de Tchebychev, et on utilisera cet exemple dans la suite de la description, mais ce pourraient être par exemple les polynômes de Legendre ou d'autres polynômes connus.

Par exemple, dans le cas de fonctions dépendant d'une seule variable (on verra plus loin le cas multivariables) on pourra utiliser la base de polynômes de Tchebychev suivants :

$$P(k,x) = Cheb(k,x) = \begin{cases} \cos(k \arccos x) & si\ |x| \le 1 \\ \cosh(k \arccos x) & si\ x \ge 1 \\ (-1)^k \cosh(k \arccos(-x)) & si\ x \le -1 \end{cases},$$

où $xED \subset \mathbb{R}$ et $k \in \mathbb{Z}^+$ est l'ordre du polynôme.

Alors f(x) peut être exprimée comme $\sum_{k=0}^{C-1} c_k Cheb(k,x)$, avec $c_0$, $c_1$,..., $c_{C-1}$ les coefficients de Tchebychev (des scalaires).

On peut alors utiliser l'état à n-qubits généré par le VQC pour représenter la solution candidate. On note qu'on parle de solution candidate de la fonction (notée $f_c$ si on cherche la fonction f) dans la mesure où les paramètres quantiques ne sont pas encore optimisés, on va converger grâce au présent procédé vers une solution optimale.

Pour reformuler, la solution $f_c$ telle qu'encodée avec des valeurs quelconques des paramètres quantiques du VQC est dite candidate, et celle $f_o$ telle qu'encodée avec des valeurs optimisées de ces paramètres est dite solution optimale de la fonction.

En notant $|\psi_f\rangle$ est l'état de sortie du VQC de la fonction f et $U_\theta$ les portes du VQC paramétrisé par les paramètres $\theta$,

on a $|\psi_f\rangle = U_\theta |0\rangle^{\otimes n} = \sum_{i=0}^{2^n-1} a_i |i\rangle$, avec $\sum_{i=0}^{2^n-1} |a_i|^2 = 1$.

On encode la solution candidate dans les amplitudes de l'état, préférentiellement dans les probabilités associées $p_i$. ($p_i=|a_i|^2$). Chaque polynôme de la base est ainsi associé à un état de base et le coefficient de ce polynôme est la probabilité de mesurer cet état de base.

Dans la mesure où les probabilités sont toujours positives, pour pouvoir également avoir des coefficients négatifs et ainsi pouvoir exprimer toutes les fonctions on peut par exemple dupliquer les polynômes avec un signe négatif : si P(k,x) est un polynôme on considère P'(k,x)=-P(k,x). Au lieu d'avoir $c_k$ négatif, on a $c_k$=0 et $c_k$'=-$c_k$.

Pour revenir à l'exemple des polynômes de Tchebychev, dans le cas particulier de x dans [-1 ; 1], Cheb(k,x) reste dans [-1 ; 1] et donc la combinaison des polynômes de Tchebychev reste bornée. Pour exprimer toute fonction f à valeurs hors de cet intervalle, il suffit d'introduire un facteur d'échelle $\lambda$ (un autre scalaire).

Au final on obtient avantageusement l'encodage suivant, adapté aux polynômes de Tchebychev mais potentiellement applicable pour toute décomposition dans une base de polynômes orthogonaux : $f_c(x) =$

$$\lambda \sum_{i=0}^{2^{n-1}-1} (p_i - p_{i+2^{n-1}}) P(i,x)$$

En résumé, le VQC, pour des paramètres quantiques $\theta$, modélise l'état qui encode la décomposition de la fonction dans la base de polynômes orthogonaux.

Comme expliqué, on utilise de manière préférée des VQC basés sur une structure de type HEA.

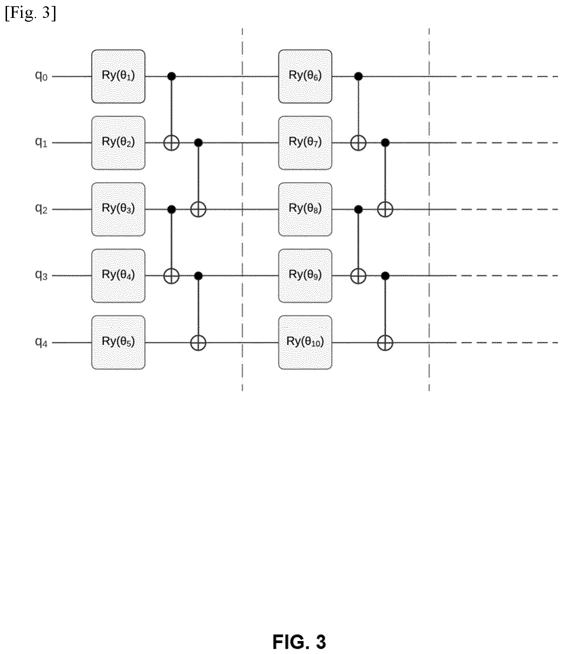

En référence à la **figure 3,** qui en représente un exemple d'architecture à 5 qubits, un HEA comprend une succession de blocs d'une porte de rotation à un seul qubit (paramétrisé par un paramètre de rotation $\theta_i$) et d'une porte « d'intrication » (CNOT) à 2 qubits. Ce bloc est répété d fois, d étant la profondeur du VQC.

Lorsque d ou n augmente, le nombre de paramètres de rotation $\theta$ augmente proportionnellement, ce qui donne lieu à un circuit avec un pouvoir d'expression plus élevé, mais le nombre de paramètres reste toujours raisonnable. Dans le mode de réalisation de la figure 3 avec d=2 et n=5 qubits on a donc 10 paramètres de rotation. Ces « couches » de portes paramétrisées rendent la structure du VQC comparable à celle des réseaux neuronaux classiques, où les portes de rotation joueraient le rôle des neurones et les angles celui des poids synaptiques. En ajustant les valeurs des paramètres du circuit, on modifie l'état de la sortie. On peut donc comme expliqué entraîner le VQC en minimisant une fonction de coût (loss) dans une boucle de type machine learning.

En général, la couche de rotation comprend des rotations autour de différents axes, à savoir Rx, Ry et Rz, mais dans l'exemple représenté, cette couche est composée uniquement de portes Ry paramétrées pour chaque qubit. Ce choix est motivé par le fait qu'on n'a présentement pas besoin de générer des états avec des amplitudes complexes puisque seules les probabilités associées sont utilisées pour coder la fonction solution.

Ainsi, l'espace de recherche est astucieusement restreint aux états réels, pour lesquels il suffit d'utiliser des portes Ry. On observe également empiriquement que les résultats pour différentes fonctions de coût atteignent déjà une précision satisfaisante avec une seule porte de rotation dans une couche (du moins dans le cas idéal, c'est-à-dire avec des opérations parfaites dans le circuit).

On comprendra toute fois qu'on n'est pas limité à cette architecture particulière, ni même aux HEA en général : il suffit qu'on ait des VQC avec des paramètres quantiques sur lesquels on peut encoder l'expression de la fonction dans la base de polynômes orthogonaux.

Le procédé comprend alors une étape (b), pour chaque fonction, d'évaluation en chacun d'un ensemble de points prédéfinis dudit domaine de définition donné, des valeurs à la fois de ladite solution candidate et d'au moins une dérivée (souvent plusieurs) de ladite solution candidate au moyen du VQC de ladite fonction, en exprimant la dérivée de ladite solution dans ladite base de polynômes orthogonaux par dérivation de ladite expression de la solution candidate de ladite fonction dans ladite base de polynômes orthogonaux.

On distingue l'évaluation de la fonction, notée (b1), de l'évaluation d'une de ses dérivées, notée (b2).

Ici par dérivée, on entend une dérivée d'ordre quelconque, et donc une dérivation une ou plusieurs fois, selon l'ordre, de ladite expression. Par exemple, dans une équation différentielle d'ordre 2, il faudra dériver deux fois. On évalue naturellement uniquement aux ordre des dérivées impliquées dans les équations différentielles du système. Par exemple si c'est une ODE du deuxième ordre sans terme du premier ordre, on n'évalue que la fonction et sa dérivée seconde.

La grande force du présent procédé est qu'on peut évaluer avec un même circuit les valeurs à la fois de la fonction et de ses dérivées. La solution est ainsi bien plus légère, tout en restant universelle car les dérivées peuvent être de n'importe ordre

Lesdits points du domaine de définition, notés $x_S \in S$, sont des « exemples » en lesquels la solution candidate correspondant aux paramètres quantiques actuels va être testée. De manière préférée, lesdits points prédéfinis du domaine de définition donné sont choisis de manière à être répartis uniformément dans ledit domaine de définition donné, mais alternativement on pourrait par exemple les choisir de manière aléatoire (méthode de Monte-Carlo). On verra des exemples plus loin. Plus on a de points prédéfinis, plus l'évaluation sera longue, mais plus le résultat sera précis. On pourra par exemple prendre de l'ordre de la dizaine ou de la centaine de points prédéfinis sur l'intervalle, par exemple 20.

L'évaluation d'un VQC est en soi une action bien connue, il s'agit d'observer son état de sortie et de déterminer les probabilités. Cette étape (b) est donc réalisée sur le calculateur quantique 2.

En l'espèce, ladite solution candidate $f_c$ est préférentiellement évaluée en un desdits points prédéfinis xs dudit domaine de définition donné par la formule $f_c(x_S) = \lambda \langle \psi_f | O_c(x_S) | \psi_f \rangle$, où $|\psi_f\rangle$ est l'état de sortie du VQC, $\lambda$ un facteur d'échelle, et $O_c$ un observable diagonal, chacun fonction de l'expression de ladite solution candidate dans la base de polynômes orthogonaux. Plus précisément, $\lambda$ et $|\psi_f\rangle$ sont fonction de la décomposition de la fonction et $O_c$ est fonction des polynômes eux-mêmes.

En particulier, $O_C(x) = \sigma_z \otimes \left( \sum_{i=0}^{2^{n-1}-1} P(i,x)|i\rangle\langle i| \right)$.

Et en reprenant l'expression avantageuse de $f_c$ en fonction des probabilités, on a :

$$O_C(x) = \begin{bmatrix} P(0,x) & & & & & 0 \\ & \ddots & & & & \\ & & P(2^{n-1}-1,x) & & & \\ & & & -P(0,x) & & \\ & & & & \ddots & \\ 0 & & & & & -P(2^{n-1}-1,x) \end{bmatrix}$$

A titre d'exemple, supposons la fonction f(x)=2x-3.

Avec des polynômes de Tchebychev on a Cheb(0,x)=cos(0)=1 et Cheb(1,x)=x, i.e. f(x)=-3*Cheb(0,x)+2*Cheb(1,x), qu'on peut réécrire en f(x)=5((0-3/5)Cheb(0,x)+(2/5-0)Cheb(1,x))

On peut ainsi facilement évaluer f en prenant

$$\lambda = 5$$

$$|\psi_f\rangle = \frac{1}{\sqrt{5}}(\sqrt{2}|01\rangle + \sqrt{3}|10\rangle)) \text{ (état à 2 qubits)}$$

$$O_C(x) = \begin{bmatrix} 1 & 0 & 0 & 0 \\ 0 & x & 0 & 0 \\ 0 & 0 & -1 & 0 \\ 0 & 0 & 0 & -x \end{bmatrix}$$

En ce qui concerne les dérivées, il suffit comme expliqué de dériver l'expression de $f_c$ :

$\frac{\partial^q f_c(x)}{\partial x^q} = \lambda \sum_{i=0}^{2^{n-1}-1}(p_i - p_{i+2^{n-1}}) \frac{\partial^q P(i,x)}{\partial x^q}$, où q est l'ordre de la dérivée.

La dérivée q-ième de ladite solution candidate $f_c$ est ainsi tout simplement évaluée préférentiellement en un desdits points prédéfinis xs dudit domaine de définition donné par la formule $\frac{\partial^q f_C(x)}{\partial x^q} = \lambda \langle \psi_f | O_{\partial^q C}(x_S) | \psi_f \rangle$, où $|\psi_f\rangle$ est l'état de sortie du même VQC, $\lambda$ le facteur d'échelle, et $O_{\partial qc}$ l'observable diagonal, chacun fonction de la q-ième dérivation de ladite expression de la solution candidate de ladite fonction dans ladite base de polynômes orthogonaux.

$O_{\partial qc}$ a exactement la même structure que $O_c$ mais avec les éléments diagonaux remplacés par les dérivées q-ièmes des polynômes correspondants, qui peuvent généralement être exprimées directement.

Par exemple, pour des polynômes de Tchebychev :

$$\frac{\partial^q Cheb(i,x)}{\partial x^q} = 2^q i \sum_{\substack{0 \le k \le i-q \\ k \equiv i-q(mod\ 2)}} \left( \frac{\frac{i+q-k}{2}-1}{\frac{i-q-k}{2}} \right) \frac{\left(\frac{i+q+k}{2}-1\right)!}{\left(\frac{i-q+k}{2}\right)!} Cheb(k,x)$$

A noter que c'est une sommation particulière dans laquelle le terme pour k=0 doit être divisé par deux s'il apparait.

En résumé, le présent procédé est particulièrement efficace, car on a uniquement besoin d'autant de circuits que de fonctions. On peut réutiliser les mêmes circuits pour évaluer les fonctions ainsi que leurs dérivées en autant de points du domaine que l'on veut.

Ensuite, le procédé comprend une étape (c) d'optimisation de la valeur desdits paramètres quantiques des VQC de chaque fonction, de sorte à minimiser une fonction de coût définie par ledit système d'équations différentielles et fonction desdites évaluations pour chaque fonction de la solution candidate et de sa dérivée.

Pour reformuler, connaissant les valeurs des fonctions et de leurs dérivées en lesdits points prédéfinis, on peut appliquer ces valeurs dans le système et calculer une erreur. Si l'erreur est nulle ou presque, c'est que $f_c$ est une excellente solution. La solution optimale $f_0$ est la « meilleure » des solutions candidates $f_c$.

Cette étape pourra être conforme à ce qui est décrit dans le document O. Kyriienko, A. E. Paine, and V. E. Elfving, Solving nonlinear differential équations with différentiable quantum circuits.

Comme expliqué il s'agit d'évaluer la fonction de coût (qui représente l'erreur), et de répéter le cas échéant les étapes (a) et (b) avec des valeurs différentes des paramètres quantiques de sorte à minimiser progressivement cette fonction de coût, et converger vers des valeurs optimisées des paramètres, de sorte à « entraîner » les VQC, de la même manière qu'on entraînerait des réseaux de neurones.

De manière générale, on distingue à chaque itération une première sous-étape (c1) de calcul de la fonction de coût, i.e. de l'erreur, puis une sous-étape (c2) de vérification d'un critère, par exemple la comparaison avec un seuil d'acceptation : si l'erreur est encore au-dessus du seuil, on met en oeuvre une nouvelle itération en modifiant la valeur des paramètres. Alternativement on peut tout à fait mettre en oeuvre un nombre d'itérations prédéfini de sorte à s'éviter la vérification du critère à chaque fois.

On pourra utiliser tout algorithme d'optimisation connu sur les valeurs des paramètres, par exemple la méthode de Broyden-Fletcher-Goldfarb-Shanno (BFGS).

De manière préférée, la fonction de coût est de la forme $L(\theta) = L^{diff}(\theta) + \eta.L^{limites}(\theta)$, où $\theta$ est l'ensemble de paramètres quantiques, $L^{diff}$ un premier terme représentatif d'une erreur sur la ou les équations différentielles, $L^{limites}$ est un deuxième terme représentatif d'une erreur sur la ou les conditions limites, et $\eta$ est un coefficient prédéfini. Ce dernier contrôle le poids des conditions limites dans l'optimisation. Il peut par exemple être choisi comme une valeur supérieure à la valeur maximale possible du terme de gauche.

En l'absence de conditions aux limites ou si elles sont très simples on peut prendre $\eta=0$ pour accélérer.

On pourra utiliser toute expression classique de fonctions de coûts, et par exemple le premier terme $L^{diff}$ peut être l'erreur moyenne au carré (MSE, Mean Square Error) de toutes les équations différentielles pour l'ensemble des points prédéfinis dudit domaine de définition donné, et/ou le deuxième terme $L^{limites}$ peut être la somme de toutes les erreurs sur toutes les conditions limites pour l'ensemble des points prédéfinis dudit domaine de définition donné.

On a alors $L^{diff}(\theta) = \frac{1}{n_S} \sum_{e \in E} \sum_{x_S \in S} DE_e[x_S, H_e(\theta)]^2$, où e est une équation différentielle du système, et $H_e$ est l'ensemble des évaluations des termes de l'équation e.

Similairement, on a $L^{limites}(\theta) = \frac{1}{n_{BC}} \sum_{f \in F} \sum_{f_{BC}, x_{BC} \in BC(f)} (f(x_{BC}, \theta) - f_{BC}(x_{BC}))^2$, où $n_{BC}$ est le nombre de conditions limites, $f_{BC}$ et $x_{BC}$ les valeurs concernées.

A l'issue de la dernière occurrence de l'étape (c), i.e. lorsque le critère choisi est satisfait (par exemple que l'erreur est en dessous du seuil d'acceptation, on juste qu'on a mis en oeuvre suffisamment d'itérations), on considère qu'on a terminé l'optimisation et donc atteint des valeurs acceptables des paramètres quantiques.

Alors, dans une étape finale (e), pour chaque fonction, est reconstruite la solution optimale de ladite fonction telle qu'encodée par le VQC avec les paramètres optimisés.

Il s'agit juste d'exprimer la solution optimale $f_o$ comme la combinaison des polynômes orthogonaux avec les coefficients correspondants aux valeurs optimisées des paramètres quantiques, en fonction des probabilités (on rappelle que $f_c(x) = \lambda \sum_{i=0}^{2^{n-1}-1}(p_i - p_{i+2^{n-1}}) P(i,x)$ et que $f_o$ est la dernière $f_c$). A noter qu'on pourrait en pratique reconstruire chaque solution candidate de cette manière pour l'évaluer ainsi à l'étape (b).

*Cas de fonctions de plusieurs variables*

Le présent procédé est universel, dans la mesure où il permet également de résoudre des systèmes comprenant des PDE, i.e. des équations dans lesquelles la ou les fonctions inconnues recherchées peuvent dépendre de $v>1$ variables indépendantes. Comme indiqué au début on note toujours f(x) mais avec $v$ composantes réelles ( $x = (x_1, x_2, \ldots, x_v) \in D \subset \mathbb{R}^v$ ).

Dans ce cas, à l'étape (b) la dérivée q-ième de ladite solution candidate $\frac{\partial^q f_c}{\partial x_{j1}\ldots\partial x_{jq}}$ avec $j_1\ldots j_q \in \{1, \ldots, v\}^q$ est évaluée en un point prédéfini $x_s$ (à $v$ composantes) dudit domaine de définition donné toujours par la formule $\frac{\partial^q f_c(x_S)}{\partial x_{j1}\ldots\partial x_{jq}} = \lambda\langle\psi_f|O_{\partial^q C}(x_S)|\psi_f\rangle$ , où, $O_{\partial^q c}$ un observable diagonal, chacun fonction de la q-ième dérivation de ladite expression de la solution candidate de ladite fonction dans ladite base de polynômes orthogonaux (à nouveau c'est seulement l'observable diagonal qui change).

En effet, dans la mesure où la dépendance en variable est encodée seulement dans les observables, passer d'un espace de dimension 1 à un espace de dimension $v$ ne change pas l'algorithme, on peut donc toujours utiliser les mêmes VQC.

Dans le cas unidimensionnel, chaque état de base est utilisé pour représenter, en notation binaire, l'ordre d'un polynôme. À l'exception du premier qubit préférentiellement utilisé pour déterminer le signe devant le polynôme, tous les qubits restants des états de base sont en effet typiquement utilisés pour coder l'ordre correspondant. Dans le cas multivarié, on peut assigner à chaque variable $x_j$ un nombre spécifique de qubits qui seront utilisés pour coder l'ordre du polynôme correspondant.

Par conséquent, chaque état de base $|i\rangle$ de l'état à (n + 1)-qubit modélisant la solution est utilisé pour coder les différents indices de chaque variable. On peut écrire la décomposition binaire de l'état de base $|i\rangle$ (en notation décimale) comme $|i\rangle = |i_0\rangle |i_1 i_2 i_3 \ldots i_n\rangle$. De manière particulièrement préfère, pour chaque variable $x_j$, on attribue $l_j$ qubits pour encoder l'ordre du polynôme (avec $l_1 + l_2 + \ldots l_v = n$) et on dénote par $L_j$ la décomposition binaire de l'ordre. Ceci permet donc de séparer l'état de base $|i\rangle$ comme le produit tensoriel du premier qubit (de signe) avec $v$ états, tel que

$$|i\rangle = |i_0\rangle|i_1\ldots i_{l_1}\rangle|i_{l_1+1}\ldots i_{l_1+l_2}\rangle \ldots |i_{l_{v-1}+1}\ldots i_n\rangle = |i_0\rangle|L_1\rangle|L_2\rangle \ldots |L_v\rangle.$$

Ainsi, la sélection du nombre de qubits $l_j$ pour chaque variable $x_j$ est libre, ce qui est très avantageux lorsque certaines variables nécessitent plus de termes dans la décomposition spectrale.

La seule chose qui peut être légèrement plus complexe à calculer que dans le cas à une seule variable est la dérivation de ladite expression de la solution candidate de ladite fonction dans ladite base de polynômes orthogonaux, ce qui a nouveau n'a aucun impact sur la partie quantique du présent procédé, et qui peut être largement facilité en choisissant astucieusement la base de polynômes orthogonaux.

Par exemple, les polynômes de Tchebychev à plusieurs variables sont simplement exprimés comme produits de polynômes de Tchebychev à une seule variable: $Cheb(i, x) = Cheb(i, x_1 \ldots, x_v) = \prod_{j=1}^{v} Cheb(L_j, x_j)$ , en reprenant $L_j$ la décomposition binaire de l'ordre

Alors la dérivée partielle d'un polynôme de Tchebychev s'écrit facilement :

$$\frac{\partial Cheb}{\partial x_j}(i, x_1 \ldots, x_v) = \frac{\partial Cheb}{\partial x_j}(L_j, x_j) \times \prod_{k=1, k\neq j}^{v} Cheb(L_k, x_k)$$

De plus on note que le produit à droite $\prod_{k=1,k\neq j}^{v} Cheb(L_k, x_k) = \frac{\prod_{k=1}^{v} Cheb(L_k,x_k)}{Cheb(L_j,x_j)} = \frac{Cheb(i,x_1...,x_v)}{Cheb(L_j,x_j)}$,

ce qui réduit le nombre de multiplications nécessaires, ce d'autant plus que tout ou partie de ces facteurs est déjà calculé pour évaluer la solution (non dérivée) en un point prédéfini.

Quand on monte encore d'un ordre, il y a deux cas :

- soit on dérive encore par rapport à la même variable $x_j$, i.e. on monte à l'ordre 2, et alors le calcul est facile :

$$\frac{\partial^2 Cheb}{\partial x_j^2}(i, x_1 ..., x_v) = \frac{\partial^2 Cheb}{\partial x_j^2}(L_j, x_j) \times \frac{Cheb(i, x_1 ..., x_v)}{Cheb(L_j, x_j)}$$

- soit on dérive par rapport à une variable différente, et on obtient, après simplification :

$$\frac{\partial^2 Cheb}{\partial x_{j_1} \partial x_{j_2}}(i, x_1 ..., x_v) = \frac{\partial Cheb}{\partial x_{j_1}}(L_{j_1}, x_{j_1})\frac{\partial Cheb}{\partial x_{j_2}}(L_{j_2}, x_{j_2})\frac{Cheb(i, x_1 ..., x_v)}{Cheb(L_{j_1}, x_{j_1})Cheb(L_{j_2}, x_{j_2})}$$

On peut ainsi, dans le cas préféré de polynômes de Tchebychev à plusieurs variables $Cheb(i, x) = Cheb(i, x_1 ..., x_v) = \prod_{j=1}^{v} Cheb(L_j, x_j)$, généraliser toute dérivée partielle d'ordre q par rapport aux variables $x_{j1}, ..., x_{jq}$, en construisant un set des $h \leq q$ variables deux à deux différentes $x_{k1}, ..., x_{kq}$, chacune apparaissant respectivement $q_1, ..., q_h$ fois avec $q_1 + ... + q_h = q$. Par exemple si h=1 on a une dérivée q fois par rapport à la même variable.

On peut donc réécrire $\frac{\partial^q Cheb}{\partial x_{j_1}...\partial x_{j_q}}(i, x_1 ..., x_v)$ en $\frac{\partial^q Cheb}{\partial^{q_1} x_{k_1}...\partial^{q_h} x_{k_h}}(i, x_1 ..., x_v)$ et de là :

$$\frac{\partial^q Cheb}{\partial x_{j_1} ... \partial x_{j_q}}(i, x_1 ..., x_v) = \prod_{g=1}^{h} \frac{\partial^{q_g} Cheb}{\partial^{q_g} x_{k_g}}(L_{k_g}, x_{k_g}) \times \frac{Cheb(i, x_1 ..., x_v)}{\prod_{g=1}^{h} Cheb(L_{k_g}, x_{k_g})}$$

A noter que si h>v/2, il est plus intéressant de revenir à l'équation $\frac{\partial Cheb}{\partial x_j}(i, x_1 ..., x_v) = \frac{\partial Cheb}{\partial x_j}(L_j, x_j) \times \prod_{k=1,k\neq j}^{v} Cheb(L_k, x_k)$ plus haut afin de réduire le nombre de produits, et donc :

$$\frac{\partial^q Cheb}{\partial x_{j_1} ... \partial x_{j_q}}(i, x_1 ..., x_v) = \prod_{g=1}^{h} \frac{\partial^{q_g} Cheb}{\partial^{q_g} x_{k_g}}(L_{k_g}, x_{k_g}) \times \prod_{k\notin\{k_g\}_g} Cheb(L_k, x_k)$$

*Résultats*

Le présent procédé a été mis en oeuvre pour résoudre les trois exemples de systèmes d'équations différentiels évoqués ci-avant.

1/ Cas simple d'un système de 2 ODE du premier ordre $\begin{cases} \frac{df(x)}{dx} - 5 = 0 \\ \frac{dg(x)}{dx} - f(x) = 0 \end{cases}$, en prenant arbitrairement f(0) = g(0) =0 sur un domaine [0, 0.95].

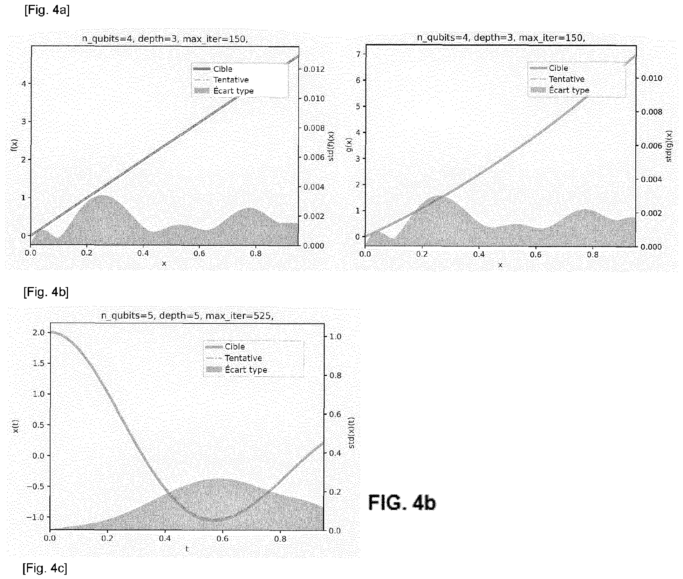

Avec seulement 4 qubits, deux HEA d'une profondeur de 3, 150 itérations dans une optimisation BFGS, et un ensemble de 20 points prédéfinis disposés régulièrement sur le domaine, on obtient le résultat visible sur la **figure 4a** (f(x) à gauche et g(x) à droite), avec respectivement en trait plein la solution exacte et en trais pointillés la solution optimale. La courbe en bas représente l'écart type en fonction de x, dont on voit qu'il ne dépasse pas 0.004.

La valeur finale de la fonction de coût n'est que de $5,12.10^{-5}$, les solutions optimales des deux fonctions sont indiscernables de la solution exacte.

2/ Cas d'un oscillateur harmonique amorti $\frac{d^2x}{dt} + 2\zeta\omega\frac{dx}{dt} + \omega^2 x = 0$, avec x(0)=2 et x'(0)=0, où $\omega$ = 9/8 et $\zeta$ = 45/8, sur un domaine [0, 1].

Dans la mesure où l'on passe à l'ordre 2, il faut plus en théorie bien plus de paramètres. Avec seulement 5 qubits, un HEA d'une profondeur de 5 et 525 itérations dans une optimisation BFGS, on obtient le résultat visible sur la **figure 4b** (unique fonction x(t)), avec respectivement en trait plein la solution exacte et en trais pointillés la solution optimale. La courbe en bas représente l'écart type en fonction de x, dont on voit qu'il ne dépasse pas 0.3.

La valeur finale de la fonction de coût n'est toujours que de $2,69.10^{-3}$.

3/ Cas d'une déformation d'un matériau en régime hypoélastique, $\begin{cases} \frac{du}{dx} = \varepsilon_{xx}(\sigma_{xx}) \\ \frac{d\sigma_{xx}}{dx} + b_x = 0 \end{cases}$, avec

$\varepsilon_{xx} = \frac{\sigma_{xx}}{3K} + \frac{2\varepsilon_0}{\sqrt{3}}\left(\frac{\sigma_{xx}}{\sqrt{3}\sigma_0}\right)^n$, u(0)=0, $\sigma_{xx}(L)$=t, b=10, $\varepsilon_0$ =0.1, $\sigma_0$ = 5, n=4, K= 100, L=0.9 et t=2, dans un domaine [0, 0.95]

Malgré la complexité de la relation non linéaire du système, en restant sur les VQC du premier exemple (4 qubits, HEA d'une profondeur de 3), toujours un ensemble de 20 points prédéfinis disposés régulièrement sur le domaine et en montant à 400 itérations dans une optimisation BFGS, on obtient le résultat visible sur la **figure 4c** (u(x) à gauche et $\sigma_{xx}(x)$ à droite), avec respectivement en trait plein la solution exacte et en trais pointillés la solution optimale. La courbe en bas représente l'écart type en fonction de x, dont on voit qu'il ne dépasse pas 0.0005 pour u(x) et 0.001 pour $\sigma_{xx}(x)$.

La valeur finale de la fonction de coût n'est que de $1,05.10^{-3}$.

On voit donc que dans tous les cas le présent procédé reste très précis même avec peu de paramètres. En pratique, 6 ou 7 qubits, et une profondeur de 4 ou 5 (soit 20-30 paramètres) suffisent largement à résoudre la plupart des systèmes d'équations différentiels rencontrés, et notamment ceux modélisant un système physique.

*Serveur*

Selon un deuxième aspect, l'invention concerne le calculateur hybride quantique-classique 1, 2 pour la mise en oeuvre du procédé selon le premier aspect.

Ce calculateur hybride comprend comme expliqué un calculateur classique 1 et un calculateur quantique 2, connectés, et le cas échéant un terminal 10 pour l'entrée et la sortie de données.

Ledit calculateur hybride quantique-classique 1, 2 est configuré pour résoudre un système d'au moins une équation différentielle portant sur au moins une fonction à valeurs réelles sur un domaine de définition donné, en mettant en oeuvre des étapes de :

- Pour chaque fonction, encodage au moyen d'un circuit variationnel quantique, VQC, de l'expression d'une solution candidate de ladite fonction dans une base de polynômes orthogonaux, ledit VQC étant défini par un ensemble de paramètres quantiques ;
- Pour chaque fonction, évaluation en chacun d'un ensemble de points prédéfinis dudit domaine de définition donné, des valeurs à la fois de ladite solution candidate et d'au moins une dérivée de ladite solution candidate au moyen du VQC de ladite fonction, en exprimant la dérivée de ladite solution dans ladite base de polynômes orthogonaux par dérivation de ladite expression de la solution candidate de ladite fonction dans ladite base de polynômes orthogonaux ;
- Optimisation de la valeur desdits paramètres quantiques des VQC de chaque fonction, de sorte à minimiser une fonction de coût définie par ledit système d'équations différentielles et fonction desdites évaluations pour chaque fonction de la solution candidate et de sa dérivée ;
- Pour chaque fonction, reconstruction d'une solution optimale de ladite fonction telle qu'encodée par le VQC avec les paramètres optimisés.

*Produit programme d'ordinateur*

Selon un quatrième et un cinquième aspects, l'invention concerne un produit programme d'ordinateur comprenant des instructions de code pour l'exécution (sur le calculateur hybride quantique-classique 1, 2) d'un procédé selon le premier aspect de résolution d'un système d'au moins une équation différentielle portant sur au moins une fonction à valeurs réelles sur un domaine de définition donné ; et un moyen de stockage (par exemple les moyens de stockage de données 12 du calculateur classique 1) sur lequel on trouve ce produit programme d'ordinateur.

**Revendications**

1. Procédé de résolution d'un système d'au moins une équation différentielle portant sur au moins une fonction à valeurs réelles sur un domaine de définition donné, le procédé comprenant la mise en oeuvre, par un calculateur hybride quantique-classique (1, 2), d'étapes de :

    (a) Pour chaque fonction, encodage au moyen d'un circuit variationnel quantique, VQC, de l'expression d'une solution candidate de ladite fonction dans une base de polynômes orthogonaux, ledit VQC étant défini par un ensemble de paramètres quantiques ;
    (b) Pour chaque fonction, évaluation en chacun d'un ensemble de points prédéfinis dudit domaine de définition donné, des valeurs à la fois de ladite solution candidate et d'au moins une dérivée de ladite solution candidate au moyen du VQC de ladite fonction, en exprimant la dérivée de ladite solution dans ladite base de polynômes orthogonaux par dérivation de ladite expression de la solution candidate de ladite fonction dans ladite base de polynômes orthogonaux ;
    (c) Optimisation de la valeur desdits paramètres quantiques des VQC de chaque fonction, de sorte à minimiser une fonction de coût définie par ledit système d'équations différentielles et fonction desdites évaluations pour chaque fonction de la solution candidate et de sa dérivée ;
    (d) Pour chaque fonction, reconstruction d'une solution optimale de ladite fonction telle qu'encodée par le VQC avec les paramètres optimisés.

2. Procédé selon la revendication 1, dans lequel chaque VQC est basé sur une structure de type Hardware Efficient Ansatz, HEA, lesdits paramètres quantiques étant des paramètres de rotation.

3. Procédé selon l'une des revendications 1 et 2, dans lequel lesdits polynômes orthogonaux sont les polynômes de Tchebychev.

4. Procédé selon l'une des revendications 1 à 3, comprenant une étape (a0) d'initialisation des paramètres quantiques de manière aléatoire.

5. Procédé selon l'une des revendication 1 à 4, dans lequel au moins une condition limite est associée audit système d'équations différentielles, la fonction de coût est de la forme $L(\theta) = L^{diff}(\theta) + \eta.L^{limites}(\theta)$, où $\theta$ est l'ensemble de paramètres quantiques, $L^{diff}$ un premier terme représentatif d'une erreur sur la ou les équations différentielles, $L^{limites}$ est un deuxième terme représentatif d'une erreur sur la ou les conditions limites, et $\eta$ est un coefficient prédéfini.

6. Procédé selon la revendication 5, dans lequel le premier terme $L^{diff}$ est l'erreur moyenne au carré de toutes les équations différentielles pour l'ensemble des points prédéfinis dudit domaine de définition donné, et le deuxième terme $L^{limites}$ est la somme de toutes les erreurs sur toutes les conditions limites pour l'ensemble des points prédéfinis dudit domaine de définition donné.

7. Procédé selon l'une des revendications 1 à 6, dans lequel ladite solution candidate $f_c$ est évaluée en un point prédéfini xs dudit domaine de définition donné par la formule $f_c(x_S) = \lambda \langle \psi_f | O_c(x_S) | \psi_f \rangle$, où $|\psi_f\rangle$ est l'état de sortie du VQC, $\lambda$ un facteur d'échelle, et $O_c$ un observable diagonal, fonctions de l'expression de ladite solution candidate dans la base de polynômes orthogonaux.

8. Procédé selon la revendication 7, dans lequel la dérivée q-ième de ladite solution candidate $\dfrac{\partial^q f_c}{\partial x_{j1} \ldots \partial x_{jq}}$ est évaluée en un point prédéfini xs dudit domaine de définition donné par la formule $\dfrac{\partial^q f_c(x_S)}{\partial x_{j1} \ldots \partial x_{jq}} = \lambda \langle \psi_f | O_{\partial^q C}(x_S) | \psi_f \rangle$, où

$x_{j1}...x_{jq}$ sont q composantes de x, $O_{\partial q_c}$ un observable diagonal, fonctions de la q-ième dérivation de ladite expression de la solution candidate de ladite fonction dans ladite base de polynômes orthogonaux.

9. Procédé selon l'une des revendications 1 à 8, dans lequel lesdits points prédéfinis du domaine de définition donné sont choisis de manière à être répartis uniformément dans ledit domaine de définition donné.

10. Procédé selon l'une des revendications 1 à 9, dans lequel ledit système d'au moins une équation différentielle modélise un système physique, ladite fonction à valeurs réelles exprimant une grandeur dudit système physique.

11. Calculateur hybride quantique-classique (1, 2), **caractérisé en ce qu'**il est configuré pour résoudre un système d'au moins une équation différentielle portant sur au moins une fonction à valeurs réelles sur un domaine de définition donné, en mettant en oeuvre des étapes de :

   - Pour chaque fonction, encodage au moyen d'un circuit variationnel quantique, VQC, de l'expression d'une solution candidate de ladite fonction dans une base de polynômes orthogonaux, ledit VQC étant défini par un ensemble de paramètres quantiques ;
   - Pour chaque fonction, évaluation en chacun d'un ensemble de points prédéfinis dudit domaine de définition donné, des valeurs à la fois de ladite solution candidate et d'au moins une dérivée de ladite solution candidate au moyen du VQC de ladite fonction, en exprimant la dérivée de ladite solution dans ladite base de polynômes orthogonaux par dérivation de ladite expression de la solution candidate de ladite fonction dans ladite base de polynômes orthogonaux ;
   - Optimisation de la valeur desdits paramètres quantiques des VQC de chaque fonction, de sorte à minimiser une fonction de coût définie par ledit système d'équations différentielles et fonction desdites évaluations pour chaque fonction de la solution candidate et de sa dérivée ;
   - Pour chaque fonction, reconstruction d'une solution optimale de ladite fonction telle qu'encodée par le VQC avec les paramètres optimisés.

12. Produit programme d'ordinateur comprenant des instructions de code pour l'exécution d'un procédé selon l'une des revendications 1 à 10 de résolution d'un système d'au moins une équation différentielle portant sur au moins une fonction à valeurs réelles sur un domaine de définition donné, lorsque ledit programme est exécuté sur un ordinateur.

13. Moyen de stockage lisible par un équipement informatique sur lequel est enregistré un produit programme d'ordinateur comprenant des instructions de code pour l'exécution d'un procédé selon l'une des revendications 1 à 10 de résolution d'un système d'au moins une équation différentielle portant sur au moins une fonction à valeurs réelles sur un domaine de définition donné.

[Fig. 1]

**FIG. 1**

[Fig. 2]

(a0) Initialisations paramètres

(a) Encodage solution avec VQC paramétrisé

(b1) Evaluation solution en points prédéfinis

(b2) Evaluation dérivée de la solution en points prédéfinis

(c1) Calcul fonction de cout

(c2) En-dessous de seuil d'acceptance? — N

Y

(d) Reconstruction solution optimale

FIG. 2

[Fig. 3]

**FIG. 3**

[Fig. 4a]

[Fig. 4b]

FIG. 4b

[Fig. 4c]

**RAPPORT DE RECHERCHE EUROPEENNE**

Numéro de la demande

EP 24 30 6601

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | OLEKSANDR KYRIIENKO ET AL: "Solving nonlinear differential equations with differentiable quantum circuits", ARXIV.ORG, CORNELL UNIVERSITY LIBRARY, 201 OLIN LIBRARY CORNELL UNIVERSITY ITHACA, NY 14853, 18 mai 2021 (2021-05-18), XP081951791, DOI: 10.1103/PHYSREVA.103.052416 * Abstract, Sections I, II; le document en entier * ----- | 1-13 | INV. G06N10/60 |
| A | SUL JINHWAN ET AL: "Generic and scalable differential-equation solver for quantum scientific computing", ARXIV.ORG, vol. 111, no. 1, 24 septembre 2024 (2024-09-24), pages 1-11, XP093251208, * Abstract, Sections I, II, III and IV * ----- | 1-13 | |
| A | LEONG FONG YEW ET AL: "Variational quantum evolution equation solver", SCIENTIFIC REPORTS, vol. 12, no. 1, 6 avril 2022 (2022-04-06), pages 1-22, XP093251218, US ISSN: 2045-2322, DOI: 10.1038/s41598-022-14906-3 * Abstract, Sections II and III. * ----- | 1-13 | **DOMAINES TECHNIQUES RECHERCHES (IPC)** G06N |
| T | HAMZA JAFFALI ET AL: "H-DES: a Quantum-Classical Hybrid Differential Equation Solver", ARXIV.ORG, CORNELL UNIVERSITY LIBRARY, 201 OLIN LIBRARY CORNELL UNIVERSITY ITHACA, NY 14853, 1 octobre 2024 (2024-10-01), XP091903626, * le document en entier * ----- | 1-13 | |

Le présent rapport a été établi pour toutes les revendications

| Lieu de la recherche | Date d'achèvement de la recherche | Examinateur |
|---|---|---|
| La Haye | 24 février 2025 | Moro Pérez, Gonzalo |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................................
& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3971793 A

**Littérature non-brevet citée dans la description**

- **M. LUBASCH** ; **J. JOO** ; **P. MOINIER** ; **M. KIFFNER** ; **D. JAKSCH**. Variational quantum algorithms for nonlinear problems. *Phys. Rev. A*, January 2020, vol. 101 (1), 010301

- **O. KYRIIENKO** ; **A. E. PAINE** ; **V. E. ELFVING**. *Solving nonlinear differential équations with différentiable quantum circuits*